# EUROPÄISCHE PATENTSCHRIFT

(11) **EP 3 039 078 B1**
(45) Veröffentlichungstag und Bekanntmachung des Hinweises auf die Patenterteilung: **16.05.2018**
(21) Anmeldenummer: 14750719.8
(22) Anmeldetag: 11.08.2014
(51) Int. Cl.: C08L 83/04, C08K 3/00

(54) **VERNETZBARE MASSEN AUF DER BASIS VON ORGANOSILICIUMVERBINDUNGEN UND DARAUS HERGESTELLTE FORMKÖRPER**
CROSS-LINKABLE COMPOSITIONS BASED ON ORGANOSILICON COMPOUNDS AND THUS PRODUCED MOULDED BODIES
SUBSTANCES RÉTICULABLES CONSTITUÉES DE COMPOSÉS ORGANOSILICIÉS ET CORPS MOULÉS FABRIQUÉS À PARTIR DE CELLES-CI

(30) Priorität: 28.08.2013 DE 102013217221
(43) Veröffentlichungstag der Anmeldung: 06.07.2016
(73) Patentinhaber: Wacker Chemie AG, 81737 München (DE)
(72) Erfinder: OSTENDORF, Detlev, 01129 Dresden (DE); SCHEIM, Uwe, 01640 Coswig (DE); SCHILDBACH, Daniel, 84503 Altötting (DE)
(74) Vertreter: Budczinski, Angelika
(86) Internationale Anmeldenummer: PCT/EP2014/067166
(87) Internationale Veröffentlichungsnummer: WO 2015/028296

(56) Entgegenhaltungen:
- EP-A1- 1 726 622
- EP-A1- 2 281 782

## Beschreibung

Die Erfindung betrifft polymergebundene künstliche Steine, ein Verfahren zu deren Herstellung sowie dafür verwendete vernetzbare Massen auf der Basis von Organosiliciumverbindungen.

Künstliche Steine bestehend aus mit geeigneten Katalysatoren vernetzbaren organischen Polymerharzen und Füllstoffen, wie beispielsweise Siliciumdioxid enthaltenden Stoffen (Quarz, Quarzit, Granit, Porphyr, Sand, Silikate, Tonerde usw.), Calciumcarbonat enthaltenden Stoffen (Marmor, Kalkgestein, Dolomit, usw.), Calcium- oder Bariumsulfat, Aluminiumoxid, Aluminiumtrihydrat, Magnesiumoxid, Magnesiumhydroxid, Zinkoxid und Siliciumcarbid enthaltenden Stoffen, sowie Verfahren zu deren Herstellung sind seit langem bekannt. Beispiele hierfür sind in US-A 4,643,921 sowie in den zum Stand der Technik erwähnten Schriften zu finden, welche ebenfalls zum Offenbarungsgehalt der vorliegenden Schrift zu zählen sind.

Als Polymerharzbasis kommt hierbei z.B. in der "Bretonstone®"- bzw. Silestone®-Technologie ein radikalisch vernetzbares Polyesterharz in Kombination mit einem Reaktivlösungsmittel wie Styrol oder Methylmethacrylat oder deren Gemische zum Einsatz. Hierzu sei beispielsweise auf US-A 4,698,010 und ES-B 2 187 313 verwiesen.

Des Weiteren gibt es Verfahren zur Herstellung künstlicher Steine, die statt des Polyesterharzes Methacrylatharze enthalten, wie beispielsweise in der Schrift US-A 2011/0 207 849 beschrieben, wobei die in dieser Schrift zum Stand der Technik aufgeführten Schriften ebenfalls zum Offenbarungsgehalt der vorliegenden Schrift für die erwähnten organischen Polymerharzbinder auf Basis Polyesterharz beziehungsweise Methacrylatharze zu zählen sind.

Nachteil aller bisher bekannten Lösungen ist, dass die Bindemittel nur begrenzte Beständigkeit gegenüber UV-Strahlung und Bewitterung zeigen. Das ist nach außen hin sichtbar, da - insbesondere bei dunklen Farbtönen - die Farben der künstlichen Steine deutlich aufgehellt werden und darüber hinaus auch deren Glanz verloren geht. Ferner ist die Polymermatrix nicht hitzestabil, d.h. die Polymere depolymerisieren unter starker Verfärbung. Außerdem ist die ausgehärtete organische Polymermatrix trotz hoher Füllstoffgehalte entflammbar und brennt mitunter mit stark rußender Flamme.

Gefüllte Massen auf Basis von Organosiloxanen sind in der Literatur ebenfalls beschrieben. So beansprucht DD-A 103 252 ein Verfahren zur Herstellung von Pressmassen auf der Basis von Siliconharzen im Gemisch mit linearen Organopolysiloxanen. DE-A 2 504 357 beschreibt Siliconharzformmassen, deren vernetzungsfähige Harzbasis sich aus Organopolysiloxan mit mindestens 1,0 Gew.-% Silicium-gebundenen OH-Gruppen und einem linearen Diorganopolysiloxan mit OH- oder Triorganylsilyl-Endgruppen zusammensetzt. US-A 3,108,985 beansprucht Phenyl-alkylsiloxane als Harzbasis. Nachteilig für alle ist, dass trotz hoher Aushärtetemperaturen nur verhältnismäßig niedrige Härten der Prüfkörper erreicht werden. Darüber hinaus kommen gesundheitsschädliche Bleiverbindungen als Katalysator zum Einsatz.

Des Weiteren werden in DE-A 102 61 917 Formkörper hergestellt auf der Basis eines zweikomponentigen additionsvernetzenden Siliconmaterials, welches kurzkettige vinylendterminierte Siloxane und Hydrogensiloxane als vernetzungsfähige Komponenten und einen Platinkatalysator enthält. Beschrieben werden Massen mit einem Füllstoffgehalt von bis zu 75 %. Nachteilig ist, dass sich höhere Füllgrade nicht erreichen lassen, ohne dass die Verarbeitbarkeit schlechter wird und die mechanischen Eigenschaften sehr stark zurückgehen.

EP 2 281 782 A1 und EP 1726 622 A1 beschreiben Siliconmassen mit Aluminiumoxid als wärmeleitfähigem Füllstoff.

Gegenstand der Erfindung sind vernetzbare Massen (M) auf Basis von Organosiliciumverbindungen (A) mit einem Anteil an Füllstoffen (B) von mindestens 85 Gew.-%, mit der Maßgabe, dass Komponente (B) zumindest zum Teil aus grobkörnigen Füllstoffen mit Korngrößen von 0,2 mm bis 10 mm besteht.

Ein weiterer Gegenstand der Erfindung ist ein Verfahren zur Herstellung von Formkörpern auf der Basis von Organosiliciumverbindungen, dadurch gekennzeichnet, dass die erfindungsgemäßen vernetzbare Massen (M) in Form gebracht und ausgehärtet werden.

In einer bevorzugten Ausführungsform des erfindungsgemäßen Verfahrens werden die vernetzbaren Massen (M) auf Basis von Organosiliciumverbindungen (A) mit einem Anteil an Füllstoffen (B) von mindestens 85 Gew.-% vermittels mechanischem Druck in Form gebracht, wobei gegebenenfalls während der Formgebung die überschüssige Luft in der Masse zum Teil oder vollständig durch Anlegen eines atmosphärischen Unterdrucks an die Form entfernt wird, und gegebenenfalls während und/oder nach der Formgebung eine weitere Verdichtung durch Vibration der Form erzielt wird, und die Massen während und/oder nach der Formgebung durch Steigerung der Temperatur zum Aushärten gebracht werden.

Bei der überschüssigen Luft, die bei Durchführung des erfindungsgemäßen Verfahrens gegebenenfalls entfernt wird, handelt es sich bevorzugt um während der Mischungsherstellung zwangsläufig, ungewollt eingeschlossene Luft in der Masse. Das erfindungsgemäße Entfernen der überschüssigen Luft wird bevorzugt durchgeführt, bevorzugt bei einem atmosphärischen Druck von weniger als 300 mbar, besonders bevorzugt weniger als 100 mbar, insbesondere weniger als 50 mbar.

Der mechanische Druck während der erfindungsgemäßen Formgebung beträgt bevorzugt mindestens 200 kPa, besonders bevorzugt mindestens 400 kPa, insbesondere mindestens 600 kPa.

Die erfindungsgemäße Formgebung wird bevorzugt bei Temperaturen von 20 bis 200°C, besonders bevorzugt bei 20 bis 120°C, insbesondere bei Umgebungstemperatur, durchgeführt.

Falls beim erfindungsgemäßen Verfahren eine weitere Verdichtung durch Vibration der Form erfolgt, was bevorzugt ist, findet diese bevorzugt bei einer Vibrationsfrequenz von mindestens 10 Hz, besonders bevorzugt mindestens 30 Hz, insbesondere mindestens 40 Hz statt.

Bei dem erfindungsgemäßen Verfahren wird die Aushärtung der vernetzbaren Massen bevorzugt bei 20 bis 200°C, besonders bevorzugt bei 50 bis 200°C, durchgeführt.

Bei dem erfindungsgemäßen Verfahren werden die Massen (M) für einen Zeitraum von bevorzugt 10 bis 120 Minuten ausgehärtet.

Bei dem erfindungsgemäßen Verfahren findet das Aushärten der Massen (M) bevorzugt bereits gleichzeitig mit der Formgebung statt.

In einer weiteren Ausführungsform des erfindungsgemäßen Verfahrens findet das Aushärten der Massen (M) separat von der Formgebung im Anschluss daran statt.

Die erfindungsgemäß eingesetzten Organosiliciumverbindungen (A) sind bereits bekannt und können nach beliebigen und bisher bekannten Methoden hergestellt werden, wie z.B. durch Hydrolyse und Kondensation von Mischungen der entsprechenden Chlorsilane, Alkoxysilane oder teilalkoxylierten Chlorsilane.

Bei den erfindungsgemäß eingesetzten Füllstoffen (B) kann es sich um beliebige, bisher bekannte Füllstoffe handeln, wobei diese grobkörnig oder feinteilig sein können.

Bei den erfindungsgemäß eingesetzten Füllstoffen (B) handelt es sich bevorzugt um Mischungen aus feinteiligen und grobkörnigen Füllstoffen (B) .

Die erfindungsgemäß eingesetzten feinteiligen Füllstoffe (B) weisen Korngrößen von bevorzugt 0,02 bis 200 µm, besonders bevorzugt von 0,3 bis 100 µm, auf. Im Falle von faserförmigen Füllstoffen entspricht die längste Ausdehnung der Korngröße.

Die erfindungsgemäß eingesetzten grobkörnigen Füllstoffe (B) weisen Korngrößen von bevorzugt 0,2 mm bis 10 mm, besonders bevorzugt von 0,2 mm bis 5 mm, insbesondere von 0,2 mm bis 3 mm, auf. Als grobkörniger Füllstoff (B) wird insbesondere Quarz eingesetzt.

Die erfindungsgemäß eingesetzte Komponente (B) besteht bevorzugt zumindest zu 20 Gew.-% aus grobkörnigen Füllstoffen mit Korngrößen von 0,2 mm bis 10 mm, besonders bevorzugt zu 40 bis 80 Gew.-% aus grobkörnigen Füllstoffen mit Korngrößen von 0,2 bis 10 mm, jeweils bezogen auf die Gesamtmenge (B).

Wenn als Füllstoffe (B) Mischungen aus feinteiligen und grobkörnigen Füllstoffen eingesetzt werden, dann beträgt das Gewichtsverhältnis von feinteiligen zu grobkörnigen Füllstoffen bevorzugt 4:1 bis 1:4, besonders bevorzugt 3:2 bis 1:4.

Die Korngrößenverteilung von Partikeln >500 µm wird bevorzugt mit einem Luftstrahlsieb e200 LS von der Firma ALPINE analysiert mit Analysensieben entsprechend den Anforderungen nach DIN ISO 3310-1 ermittelt. Die Analyse der Partikelgrößenverteilung im Bereich von 0,02 bis 500 µm wird bevorzugt mit einem CILAS 1064 PARTICLE SIZE ANALYZER von der Firma Cilas durchgeführt.

Die erfindungsgemäßen Massen enthalten Füllstoffe (B) in Mengen von insgesamt bevorzugt 90 bis 99 Gewichtsteilen, besonders bevorzugt von 90 bis 96 Gewichtsteilen, jeweils bezogen auf 100 Gewichtsteile der vernetzbaren Masse (M).

Beispiele für erfindungsgemäß eingesetzte Füllstoffe (B) sind nicht verstärkende Füllstoffe, also Füllstoffe mit einer BET-Oberfläche von vorzugsweise bis zu 50 m²/g, wie Quarzpulver, Quarzgranulat, geschmolzene Quarzpulver, Quarzglaspulver, Glaspulver, Diatomeenerde, Calciumsilikat, Magnesiumsilikat, Zirkoniumsilikat, Talkum, Kaolin, Zeolithe, Metalloxidpulver, wie Aluminium-, Titan-, Zirkonium-, Eisen- oder Zinkoxide bzw. deren Mischoxide, Bariumsulfat, Calciumcarbonat, Marmormehl, Gips, Siliciumnitrid, Siliciumcarbid, Bornitrid, sowie verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; sowie Aluminiumtrihydroxid, Magnesiumhydroxid; sowie faserförmige Füllstoffe, wie Wollastonit, Montmorrilonit, Bentonit sowie geschnittene und/oder gemahlene Fasern aus Glas (Glaskurzfasern), oder Mineralwolle. Die genannten Füllstoffe können hydrophobiert sein, beispielsweise durch die Behandlung mit Organosilanen bzw. -siloxanen oder mit Stearinsäure.

Bevorzugt handelt es sich bei den eingesetzten Füllstoffen (B) um Aluminiumtrihydroxid oder um anorganische siliciumhaltige Füllstoffe, insbesondere um solche aus natürlichen Quellen, wie Quarz, Cristobalit, Talkum, und um faserförmige siliciumhaltige Füllstoffe aus natürlichen Quellen wie Montmorillonit und Wollastonit, oder um synthetische siliciumhaltige Produkte wie pyrogene Kieselsäure, welche durch Flammenhydrolyse von z.B. Tetrachlorsilan in einer Knallgasflamme erhalten werden kann ("fumed silica") oder amorpher Quarz, welcher durch thermische Nachbehandlung von pyrogener Kieselsäure erhältlich ist ("fused silica") oder um anorganische faserförmige synthetische siliciumhaltige Füllstoffe wie geschnittene oder gemahlene Glaskurzfasern.

Besonders bevorzugt handelt es sich bei Komponente (B) um Quarz, Cristobalit, geschnittene oder gemahlene Glaskurzfasern, Montmorillonit, Wollastonit oder Talk, die ggf. oberflächenbehandelt sein können.

Bevorzugt handelt es sich bei den erfindungsgemäßen bzw. im erfindungsgemäßen Verfahren eingesetzten Massen (M) um solche enthaltend
(A) 100 Gewichtsteile mindestens einer vernetzungsfähigen Organosiliciumverbindung,
(B) 900 bis 2400 Gewichtsteile mindestens eines Füllstoffs,
gegebenenfalls (C) Katalysatoren,
gegebenenfalls (D) Initiatoren,
gegebenenfalls (E) Beschleuniger,
gegebenenfalls (F) Inhibitoren und
gegebenenfalls (G) weitere Bestandteile
handelt, mit der Maßgabe, dass der Anteil an Füllstoffen (B) in der Masse (M) mindestens 85 Gew.-% beträgt und dass Komponente (B) zumindest zum Teil aus grobkörnigen Füllstoffen mit Korngrößen von 0,2 mm bis 10 mm besteht.

Der Anteil der Komponenten (A) bis (G) in der erfindungsgemäßen Masse (M) beträgt bevorzugt 95 bis 100 Gew.-%. Insbesondere enthalten die Massen (M) außer den Bestandteilen (A) bis (G) keine weiteren Bestandteile.

Die Herstellung der erfindungsgemäßen Massen (M) kann nach bekannten Verfahren erfolgen, wie beispielsweise durch einfaches mechanisches Vermengen der einzelnen Komponenten (A) bis (G) in beliebiger Reihenfolge. Je nach Konsistenz und Viskosität der Mischung kann der Mischprozess an Walzwerken, Knetern, Dissolvern, Zwangsmischern, wie z.B. Tellermischern, Ringtrogmischern, Planetenmischern, Trommelmischern, Doppelwellen-Chargenmischern oder einfachen Rührwerken erfolgen.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge.

Bevorzugt werden bei der Herstellung der erfindungsgemäßen Massen (M) zunächst die Füllstoffe (B) in einem geeigneten Mischaggregat vorgelegt und gegebenenfalls zusammen mit Komponente (G) vermengt. Danach werden Organosiliciumverbindungen (A) sowie gegebenenfalls Komponenten (C) bis (F) zugegeben.

In einer weiteren bevorzugten Ausführungsform zur Herstellung der erfindungsgemäßen Massen (M) werden die Organosiliciumverbindungen (A) vorgelegt, anschließend mit Füllstoffen (B) und danach gegebenenfalls mit Komponenten (C) bis (G) vermengt.

Bei den oben genannten Herstellungsverfahren können die Organosiliciumverbindungen (A) sowie gegebenenfalls die Komponenten (C) bis (F) jeweils einzeln oder als Vormischung (V) eingesetzt werden.

Falls bei den oben genannten Herstellungsverfahren verschiedene grobkörnige und gegebenenfalls feinteilige Füllstoffe (B) eingesetzt werden, so erfolgt besonders bevorzugt die Reihenfolge der Zugabe entsprechend der Körnung, d.h. es werden der Reihenfolge nach zuerst die grobkörnigeren Füllstoffe (B) vorgelegt und diese dann mit den feinteiligeren Füllstoffen (B) vermischt.

Die Herstellung der Mischung (M) kann diskontinuierlich, semikontinuierlich oder kontinuierlich erfolgen.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 150°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Die erfindungsgemäßen Massen (M) sind in einer bevorzugten Ausführungsform knetbare, bei Raumtemperatur sehr hochviskose Mischungen von kittähnlicher Konsistenz, die jedoch bei entsprechend hohem mechanischem Druck zum Fließen gebracht werden können.

Die erfindungsgemäßen Massen (M) haben in einer weiteren bevorzugten Ausführungsform die Konsistenz von nassem Sand. Sie sind förderbar, z.B. auf Transportbändern, haben eine bis zur Weiterverarbeitung ausreichende Lagerfähigkeit.

Die erfindungsgemäßen Massen (M) können durch mechanischen Druck bei Temperatur der Umgebung oder gegebenenfalls bei erhöhter Temperatur in beliebige Form gebracht werden.

Die erfindungsgemäßen eingesetzten Massen (M) können unter den gleichen Bedingungen vernetzen gelassen werden wie bisher bekannte vernetzbare Massen auf der Basis von Organosiliciumverbindungen.

Bei den erfindungsgemäß eingesetzten Organosiliciumverbindungen (A) kann es sich um beliebige, bisher prinzipiell bekannte Typen von Organosiliciumverbindungen handeln, wie beispielsweise durch Kondensationsreaktion vernetzbare Organosiliciumverbindungen, durch Additionsreaktion vernetzbare Organosiliciumverbindungen, peroxidisch vernetzbare Organosiliciumverbindungen sowie strahlungsvernetzbare Organosiliciumverbindungen.

Bei den erfindungsgemäß eingesetzten Organosiliciumverbindungen (A) handelt es sich bevorzugt um durch Kondensationsreaktion vernetzbare Organosiliciumverbindungen oder durch Additionsreaktion vernetzbare Organosiliciumverbindungen.

Beispiele für gegebenenfalls eingesetzte weitere Bestandteile (G) sind Pigmente, Riechstoffe, Oxidationsinhibitoren, Mittel zur Beeinflussung der elektrischen Eigenschaften, wie leitfähiger Ruß, flammabweisend machende Mittel, alle bisher in vernetzbaren Massen bekannte weitere Stoffe, wie funktionelle Silane, wie Methacrylsilane, Glycidoxysilane und Mercaptosilane; Silikate, wie Natriumorthosilikat, Dinatriumdisilikat, Dinatriumtrisilikat, Kaliumsilikat, Calciumsilikat und Magnesiumsilikat; Wasser, auch adsorbiert, z.B. an Zeolithe, Cyclodextrine oder als Kristallwasser gebunden in Salzen, wie Natriumsulfat-decahydrat, Aluminiumsulfat-octadecahydrat, Caliumsulfat-dihydrat, Dinatriummetasilikat-Nonahydrat und Dinatriummetasilikat-Pentahydrat.

Beispiele für gegebenenfalls eingesetzte Pigmente (G) sind anorganische Pigmente wie Eisenoxide (gelb, schwarz, rot), Chrom(III)-oxid, Titandioxid und Ruß; Farbstoffe, wie Phthalocyanine und Azoverbindungen; Effektpigmente zur Erzeugung eines Metallic-Effekts wie Plättchen aus Gold, Silber, Kupfer, Aluminium, Silicium, Glimmer, ggf. beschichtet z.B. mit FeTiO₃, Fe₂O₃, TiO₂, oder Flüssigkristallpigmente zur Erzeugung eines goniochromatischen Farbeffekts. Die Pigmente können in Pulverform oder dispergiert in einer geeigneten Flüssigkeit, bevorzugt in einer in der Mischung (M) enthaltenen flüssigen Komponente eingesetzt werden. Des Weiteren können die Pigmente auf die grobteiligen Füllstoffe aufgezogen, als oberflächliche Beschichtung, eingesetzt werden.

Falls die erfindungsgemäßen Massen (M) Komponente (G) enthalten, handelt es sich um Mengen von bevorzugt 1 bis 30 Gewichtsteilen, besonders bevorzugt 1 bis 20 Gewichtsteilen, insbesondere 1 bis 10 Gewichtsteilen, jeweils bezogen auf 100 Gewichtsteile Organosiliciumverbindungen (A).

### Durch Kondensationsreaktion vernetzende Massen (M-1)

In einer bevorzugten Ausführungsform der vorliegenden Erfindung handelt es sich bei den erfindungsgemäßen Massen (M) bevorzugt um Massen (M-1), die durch Kondensationsreaktion vernetzbare Organosiliciumverbindungen (A1) enthalten. Solche Organosiliciumverbindungen (A1) sind im Allgemeinen dadurch gekennzeichnet, dass sie Si-gebundene Hydroxy- und/oder Organyloxygruppen enthalten, wobei während der Vernetzung Wasser und/oder der entsprechende Alkohol freigesetzt wird.

Bevorzugt handelt es sich bei den erfindungsgemäßen Massen (M-1) um solche im Wesentlichen bestehend aus
(A-1) 100 Gew.-Teilen mindestens einer kondensationsfähige Gruppen aufweisenden Organosiliciumverbindung,
(B) 900 bis 2400 Gew.-Teilen mindestens eines Füllstoffs,
gegebenenfalls (C-1) Kondensationskatalysatoren und
gegebenenfalls (G) weiteren Bestandteilen,
mit der Maßgabe, dass der Anteil an Füllstoffen (B) in der Masse (M-1) mindestens 85 Gew.-% beträgt und dass Komponente (B) zumindest zum Teil aus grobkörnigen Füllstoffen mit Korngrößen von 0,2 mm bis 10 mm besteht.

Im Rahmen der vorliegenden Erfindung sollen unter der Bezeichnung "kondensationsfähige" Reste auch solche Reste verstanden werden, die auch einen gegebenenfalls vorangehenden Hydrolyseschritt miteinschließen.

Bei den durch Kondensationsreaktion vernetzenden Organosiliciumverbindungen (A-1) in den Massen (M-1) kann es sich um alle nach dem Stand der Technik bekannte derartige Verbindungen handeln. Bevorzugt handelt es sich bei (A-1) um solche mit mindestens 0,05 Gew.-% Hydroxygruppen und 0 bis 15 Gew.-% Alkoxygruppen aufweisende Organopolysiloxane.

Beispiele für Komponente (A-1) sind durch Hydrolyse von Diorganyldichlorsilanen mit einem Überschuss an Wasser erhältliche im Wesentlichen linearen Polydiorganosiloxane mit 5 bis 50 Siliciumatomen pro Molekül. Weitere Beispiele für Komponente (A-1) sind durch Hydrolyse von Mischungen von Diorganyldichlorsilanen mit bis zu 5 Mol% Organyltrichlorsilanen und/oder Tetrachlorsilan mit einem Überschuss an Wasser erhältliche sternförmige Polyorganosiloxane mit 10 bis 100 Siliciumatomen pro Molekül.

Beispiele für Organosiliciumverbindungen (A-1) sind OH-terminierte lineare Polydimethylsiloxane mit einer durchschnittlichen Kettenlänge von 5 bis 50 Siloxy-Einheiten zum Beispiel entsprechend der Formel HO-(Me₂SiO)₅-H und sternförmige Polydimethylsiloxane zum Beispiel entsprechend der Formel [HO-(Me₂SiO)₁₀]₃SiMe oder [HO-(Me₂SiO)₁₀]₄Si.

Weitere Beispiele für Komponente (A-1) sind durch partielle Hydrolyse eines oder mehrerer Organyltriethoxysilane mit Wasser erhältliche Organylethoxypolysiloxane mit 5 bis 25 Siliciumatomen pro Molekül. Diese Verbindungen sind bevorzugt flüssig. Statt Organyltriethoxysilanen können auch Organyltrimethoxysilane zur Herstellung verwendet werden, wobei dann Organylmethoxypolysiloxane erhältlich sind. Ein Beispiel für eine derartige Verbindung ist (MeSiO_{3/2} )_{0,37}(Me(EtO)SiO_{2/2})_{0,46}(MeSi(EtO)₂SiO_{1/2})_{0,17} mit Mw = 2400 g/mol, Mn = 900 g/mol und Mw/Mn = 2,7.

Weitere Beispiele für Komponente (A-1) sind durch partielle Hydrolyse von Tetraethoxysilane oder Tetramethoxysilan mit Wasser erhältliche Verbindungen mit 5 mit 25 Siliciumatomen pro Molekül. Ein Beispiel für eine derartige Verbindung ist (Si(OEt)₂O_{2/2})_{0,42}(Si(OEt)O_{3/2})_{0,19}(Si(OEt)₃O_{1/2})_{0,39} mit Mw = 1000 g/mol, Mn = 800 g/mol und Mw/Mn = 1,2.

Weitere Beispiele für Komponente (A-1) sind durch Hydrolyse von Organylethoxychlorsilanen mit einem Überschuss an Wasser erhältliche Organylsilsequioxane mit durchschnittlich mindestens 40 Siliciumatomen pro Molekül. Diese Verbindungen sind bevorzugt fest. Statt Organylethoxychlorsilane können auch Organylmethoxychlorsilane zur Herstellung verwendet werden. Auf diese Art ist z.B. eine Verbindung der Formel (MeSiO_{3/2})_{0,88}(MeSi(OH)O_{2/2})_{0,05}(MeSi(OEt)O_{2/2})_{0,06}(Me₂SiO_{2/2})_{0,01} mit Mw = 6600 g/mol, Mn = 2000 g/mol und Mw/Mn = 3,3 erhältlich.

Bei den Organylresten in der Komponente (A-1) handelt es sich bevorzugt um Methyl-, Ethyl-, n-Propyl-, Vinyl-, 2,4,4-Trimethylpentyl-, n-Octyl-, Phenyl- oder Hexadecylrest.

Weitere Beispiele für Komponente (A-1) sind Organyltriethoxysilane oder Organyltrimethoxysilane, wie z.B. n-Octyltrimethoxysilan, n-Octyltriethoxysilan, (2,4,4-Trimethylpentyl)trimethoxysilan, (2,4,4-Trimethylpentyl)triethoxysilan, n-Hexadecyltrimethoxysilan, n-Hexadecyltriethoxysilan, n-Nonacosyltriethoxysilan, n-Nonacosyltrimethoxysilan, n-Triacontyltrimethoxysilan, n-Triacontyltriethoxysilan, Cyclohexyltrimethoxysilan und Cyclohexyltriethoxysilan. Darüber hinaus können Diorganyldiethoxysilane oder Diorganyldimethoxysilane eingesetzt werden. Beispiele sind n-Octylmethyldimethoxysilan, n-Octylmethyldiethoxysilan, (2,4,4-Trimethylpentyl)methyldimethoxysilan, (2,4,4-Trimethylpentyl)methyldiethoxysilan, n-Hexadecylmethyldimethoxysilan, n-Hexadecylmethyldiethoxysilan, (Cyclohexyl)methyldimethoxysilan oder (Cyclohexyl)methyldiethoxysilan.

Wenn Organosiliciumverbindung (A-1) als Vormischung (V-1) eingesetzt wird, so hat die Vormischung (V-1) bevorzugt eine dynamische Viskosität von kleiner 1000 mPa·s bei 80°C.

Bei der durch Kondensationsreaktion vernetzenden Organosiliciumverbindung (A-1) kann es sich um eine einzelne Organosiliciumverbindung oder um Mischungen aus mehreren Organosilciumverbindungen, wie z.B. kondensationsfähige Gruppen aufweisene Siloxane und Silanvernetzer, handeln.

Besonders bevorzugt wird als Komponente (A-1) ein Gemisch aus einem bei 20°C festen Siliconharz mit einem bei 20°C flüssigen Organylsilan und/oder -Siloxan eingesetzt.

Als Kondensationskatalysatoren (C-1) können alle bisher bereits bekannten Katalysatoren für Kondensationsreaktion eingesetzt werden, also Lewis- und Brønstedt-Säuren und -Basen, wobei metallhaltige Lewissäuren und nicht-metallhaltige Brønstedt-Basen bevorzugt sind.

Beispiele für gegebenenfalls eingesetzte Katalysatoren (C-1) sind Diorganozinnverbindungen wie Dioctylzinndilaurat, Bismuth(III)-neo-decanoat, Zinn(II)-octoat, Kaliumsiliconat, Lithiumhydroxid, Natriumhydroxid, Kaliumhydroxid, Calciumhydroxid, Lithiummethanolat, Natriummethanolat, Kaliummethanolat, Magnesiummethanolat, Calciummethanolat, Lithiumethanolat, Natriumethanolat, Kaliumethanolat, Magnesiumethanolat, Calciumethanolat, 1,8-Diazabicyclo[5.4.0]undec-7-en, 3-Aminopropyltriethoxysilan, 3-(2-aminoethyl)aminopropylmethyldimethoxysilan, 1,5,7-Triazabicyclo[4.4.0]dec-5-en, 7-Methyl-1,5,7-triazabicyclo[4.4.0]dec-5-en und N,N,N',N'-Tetramethylguanidin.

Falls Kondensationskatalysatoren (C-1) eingesetzt werden, dann werden sie im Falle der nicht-metallhaltigen Brønstedt-Basen bevorzugt in Mengen von 0,01 bis 0,5 Gewichtsteilen und im Falle der metallhaltigen Lewis-Säuren in Mengen von 0,5 bis 10 Gewichtsteilen eingesetzt, jeweils bezogen auf 100 Gewichtsteile Komponente (A-1).

### Durch Additionsreaktion vernetzende Massen (M-2)

In einer weiteren bevorzugten Ausführungsform der vorliegenden Erfindung handelt es sich bei den erfindungsgemäßen Massen (M) bevorzugt um Massen (M-2), die durch Additionsreaktion vernetzbare Organosiliciumverbindungen (A-2) enthalten. Diese Massen (M-2) sind im Allgemeinen dadurch gekennzeichnet, dass sie Organosilicumverbindungen (A-2) mit zur Hydrosilylierungsreaktion befähigten Gruppen enthalten, bevorzugt Organosiliciumverbindungen, die SiC-gebundene Reste mit aliphatischen Kohlenstoff-Kohlenstoff-Mehrfachbindungen aufweisen, Organosiliciumverbindungen mit Si-gebundenen Wasserstoffatomen und/oder Organosiliciumverbindungen, die sowohl SiC-gebundene Reste mit aliphatischen Kohlenstoff-Kohlenstoff-Mehrfachbindungen als auch Si-gebundene Wasserstoffatome aufweisen.

Bevorzugt handelt es sich bei den erfindungsgemäßen Massen (M-2) um solche im Wesentlichen bestehend aus
(A-2) 100 Gew.-Teilen mindestens einer vernetzungsfähigen Organosiliciumverbindung ausgewählt aus der Gruppe bestehend aus Organosiliciumverbindungen (A-2-1), die SiC-gebundene Reste mit aliphatischen Kohlenstoff-Kohlenstoff-Mehrfachbindungen aufweisen, Organosiliciumverbindungen (A-2-2) mit Si-gebundenen Wasserstoffatomen und Organosiliciumverbindungen (A-2-3), die SiC-gebundene Reste mit aliphatischen Kohlenstoff-Kohlenstoff-Mehrfachbindungen und Si-gebundene Wasserstoffatome aufweisen, mit einem molaren Verhältnis Si-H zu SiC-gebundenen Resten mit aliphatischen Kohlenstoff-Kohlenstoff-Mehrfachbindungen von bevorzugt 0,5:1 bis 2:1,
(B) 900 bis 2400 Gew.-Teilen mindestens eines Füllstoffs,
(C-2) die Anlagerung von Si-gebundenem Wasserstoff an aliphatische Mehrfachbindung fördernde Katalysatoren,
gegebenenfalls (F-2) Inhibitoren und
gegebenenfalls (G-2) weiteren Bestandteilen,
mit der Maßgabe, dass der Anteil an Füllstoffen (B) in der Masse (M-2) mindestens 85 Gew.-% beträgt und dass Komponente (B) zumindest zum Teil aus grobkörnigen Füllstoffen mit Korngrößen von 0,2 mm bis 10 mm besteht.

Bei den in Komponente (A-2) enthaltenen Resten mit aliphatischen Kohlenstoff-Kohlenstoff-Mehrfachbindungen handelt es sich bevorzugt um SiC-gebundene Alkenylgruppen, bevorzugt um Vinyl- oder Allylgruppen.

Insbesondere handelt es sich bei Organosiliciumverbindungen (A-2) entweder um Siliconharze herstellbar durch Umsetzung der entsprechenden in Toluol gelösten Chlorsilane, bevorzugt ausgewählt aus Methyltrichlorsilan, Phenyltrichlorsilaen, Phenyldichlorsilan, Vinyltrichlorsilan, Phenylmethyldichlorsilan, Dimethyldichlorsilan, Methyldichlorsilan, Vinylmethyldichlorsilan, Vinyldichlorsilan, Dimethylchlorsilan, Vinyldimethylchlorsilan, Trimethylchlorsilan und/oder Tetrachlorsilan, mit einem Unterschuss an Alkohol, bezogen auf die Anzahl an Si-Cl-Bindungen, wobei HCl zumindest zum Teil entweicht, und anschließender Umsetzung mit einem Überschuss an Wasser, bezogen auf die Summe der Si-Cl- und Si-Alkoxy-Bindungen, und nachfolgender Trennung der wässrigen und organischen Phase sowie Abtrennung des Toluols und Alkohols aus der organischen Phase; oder um Siliciumverbindungen herstellbar durch Umsetzung der oben erwähnten Chlorsilane allein oder im Gemisch untereinander mit dem entsprechenden Alkohol (Alkoholyse) im stöchiometrischen Überschuss und ggf. Wasser (Hydrolyse, Kondensation) im stöchiometrischen Unterschuss, bezogen auf ursprünglich vorhandene Si-Cl-Bindungen. Als Alkohol werden bevorzugt Methanol oder Ethanol eingesetzt. In Komponente (A-2) beträgt das molare Verhältnis Si-H:Si-Alkenyl, bevorzugt Si-H:Si-Vinyl, bevorzugt 0,55:1 bis 1,8:1, besonders bevorzugt 0,6:1 bis 1,5:1, insbesondere 0,95:1 bis 1,05:1. Dementsprechend müssen die zur Synthese der oben erwähnten Substanzen nötigen Chlorsilane in Ihrem Mengenverhältnis so ausgewählt werden, dass diese Verhältnisse erhalten werden.

Beispiele für die Katalysatoren (C-2) in den durch Additionsreaktion vernetzbaren Massen (M) sind alle bisher bekannten Hydrosilylierungskatalysatoren, auf der Basis von Nickel, Eisen, Platin, Rhodium, Iridium, Palladium, Ruthenium oder Osmium, vorzugsweise ein Metall aus der Gruppe der Platinmetalle oder eine Verbindung oder einem Komplex aus der Gruppe der Platinmetalle, wie z.B. metallisches und feinverteiltes Platin, das sich auf Trägern, wie Siliziumdioxid, Aluminiumdioxid oder Aktivkohle befinden kann; Platinhalogenide, z.B. PtCl₄, H₂PtCl₆x6H₂O, Na₂PtCl₄x4H₂O; Platin-Olefinkomplexe; Platin-Vinylsiloxankomplexe, wie Platin-1,3-divinyl-1,1,3,3-tetramethyldisiloxan. Bevorzugt wird als Katalysator (C-2) der in der Literatur lange bekannte Karstedt Katalysator (US 3 775 452) eingesetzt.

Die erfindungsgemäßen Massen (M-2) enthalten Katalysatoren (C-2) in Mengen von bevorzugt 0,0001 bis 0,1000 Gewichtsteilen, besonders bevorzugt 0,0001 bis 0,05 Gewichtsteilen, insbesondere 0,0001 bis 0,01 Gewichtsteilen, jeweils bezogen auf das Nettogewicht des Metalls in der Verbindung, d.h. ohne Berücksichtigung von Liganden, Gegenionen oder dergleichen, und bezogen auf 100 Gewichtsteile Organosiliciumverbindung (A-2).

Beispiele für gegebenenfalls eingesetzte Inhibitoren (F-2), welche die Anlagerung von Si-gebundenem Wasserstoff an aliphatische Mehrfachbindungen verzögern, sind alle bisher in durch Additionsreaktion vernetzbaren Massen bekannten Inhibitoren, wie 1,3-Divinyl-1,1,3,3-tetramethyldisiloxan, Benzotriazol, Diallylformamide, Alkylthioharnstoffe, Thiurammonosulfide und -disulfide, Methylethylketoxim, organische oder siliziumorganische Verbindungen mit einem Siedepunkt von mindestens 25°C bei 1013 mbar und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol, 2,5-Dimethyl-1-hexin-3-ol, 3,7-Dimethyloct-1-in-6-en-3-ol, eine Mischung aus Diallylmaleinat und Vinylacetat, Maleinsäuremonoester, und Inhibitoren wie die Verbindung der Formel HC=C-C(CH₃)(OH)-(CH₂)₂-CH=C(CH₃)₂, käuflich erwerblich unter dem Handelsnamen "Dehydrolinalool" bei der Firma BASF SE.

Falls die erfindungsgemäßen Massen (M-2) Komponente (F-2) enthalten, handelt es sich um Mengen von bevorzugt 0,0001 bis 1 Gewichtsteilen, besonders bevorzugt 0,0001 bis 0,5 Gewichtsteilen, insbesondere 0,0001 bis 0,1 Gewichtsteilen, jeweils bezogen auf 100 Gewichtsteile Organosiliciumverbindung (A-2).

Der Zusatz von Wasser als weiterer Bestandteil (G) ist nicht bevorzugt, weder als solches, noch gebunden als Kristallwasser oder adsorbiert oder in Form von wasserabspaltenden Verbindungen.

Besonders bevorzugt handelt es sich bei den erfindungsgemäßen Massen
(M-2) um solche im Wesentlichen bestehend aus
(A-2) 100 Gew.-Teilen mindestens einer vernetzungsfähigen Organosiliciumverbindung (A-2), zusammengesetzt aus einer Si-Vinyl-Gruppen enthaltende Organosilicumverbindung (A-2-1) und einer Si-H-Gruppen enthaltende Organosiliciumverbindung (A-2-2), in einem solchen Verhältnis, dass das molare Verhältnis von Si-H-:Si-Vinyl-Gruppen in Komponente (A-2) insgesamt 0,95:1 bis 1,05:1 beträgt,
(B) 900 bis 2400 Gew.-Teilen Quarz aus natürlichen Quellen, als Gemisch einer feinteiligen Körnung mit einer Korngröße von 0,02 bis 200 µm und einer grobteiligen Körnung mit einer Korngröße von 0,2 mm bis 10 mm und einem Mischungsverhältnis, bezogen auf das Gewicht der Füllstoffe, von feinteiliger Körnung zu grobteiliger Körnung von 4:1 bis 1:4,
(C-2) 0,0001 bis 0,005 Gew.-Teilen Platin in Form des Karstedt-Katalysators,
(F-2) 0,001 bis 1 Gew.-Teilen Inhibitoren ausgewählt aus Tetramethylthiurammonosulfid und 1-Ethinylcyclohexan-1-ol und (G-2) 0,01 bis 10 Gew.-Teilen weiteren Bestandteilen .

In einer weiteren besonders bevorzugten Ausführungsform handelt es sich bei den erfindungsgemäßen Massen (M-2) um solche im Wesentlichen bestehend aus
(A-2) 100 Gew.-Teilen mindestens einer vernetzungsfähigen Organosiliciumverbindung (A-2), zusammengesetzt aus einer Si-Vinyl-und Si-H-Gruppen enthaltende Organosilicumverbindung (A-2-3) sowie gegebenenfalls einer Si-H-Gruppen enthaltende Organosiliciumverbindung (A-2-2) und/oder einer Si-Vinyl-Gruppen enthaltende Organosilicumverbindung (A-2-1), in einem solchen Verhältnis, dass das molare Verhältnis von Si-H-:Si-Vinyl-Gruppen in Komponente (A-2) insgesamt 0,95:1 bis 1,05:1 beträgt,
(B) 900 bis 2 400 Gew.-Teilen Quarz aus natürlichen Quellen, als Gemisch einer feinteiligen Körnung mit einer Korngröße von 0,02 bis 200 µm und einer grobteiligen Körnung mit einer Korngröße von 0,2 mm bis 10 mm und einem Mischungsverhältnis, bezogen auf das Gewicht der Füllstoffe, von feinteiliger Körnung zu grobteiliger Körnung von 4:1 bis 1:4,
(C-2) 0,0001 bis 0,005 Gew.-Teilen Platin in Form des Karstedt-Katalysators,
(F-2) 0,001 bis 1 Gew.-Teilen Inhibitor ausgewählt aus Tetramethylthiurammonosulfid und 1-Ethinylcyclohexan-1-ol und
(G-2) 0,01 bis 10 Gew.-Teilen weitere Bestandteile.

### Radikalisch vernetzende Massen (M-3)

Falls es sich bei der erfindungsgemäßen Masse (M) um Massen (M-3) handelt, die radikalisch vernetzbare Organosiliciumverbindungen (A-3) enthalten, ist Komponente (A-3) im Allgemeinen dadurch gekennzeichnet, dass sie zur Radikalreaktion befähigte Si-gebundene einfach oder mehrfach ungesättigte Alkenylgruppen, bevorzugt Vinyl- oder Allylgruppen, und/oder Si-gebundene, gegebenenfalls substituierte, Kohlenwasserstoffreste enthält.

Bevorzugt handelt es sich bei den erfindungsgemäßen Massen (M-3) um solche im Wesentlichen bestehend aus
(A-3) 100 Gew.-Teilen mindestens einer vernetzungsfähigen Organosiliciumverbindung ausgewählt aus der Gruppe bestehend aus Organosiliciumverbindungen, die SiC-gebundene Phenyl- und/oder SiC-gebundene Methyl- und/oder SiC-gebundene Vinyl- oder Allylreste aufweisen, wobei sich die Organosiliciumverbindungen im Wesentlichen aus linearen Organopolysiloxaneinheiten und/oder im Wesentlichen aus verzweigten Organopolysiloxaneinheiten mit Harzstruktur zusammensetzen,
(B) 900 bis 2 400 Gew.-Teilen mindestens eines Füllstoffs,
gegebenenfalls (D-3) Initiatoren,
gegebenenfalls (E-3) Beschleuniger und
gegebenenfalls (G-3) weiteren Bestandteilen,
mit der Maßgabe, dass der Anteil an Füllstoffen (B) in der Masse (M-3) mindestens 85 Gew.-% beträgt und dass Komponente (B) zumindest zum Teil aus grobkörnigen Füllstoffen mit Korngrößen von 0,2 mm bis 10 mm besteht.

Insbesondere handelt es sich bei Organosiliciumverbindungen (A-3) entweder um Siliconharze herstellbar durch Umsetzung der entsprechenden in Toluol gelösten Chlorsilane, bevorzugt Methyltrichlorsilan, Phenyltrichlorsilaen, Phenylmethyldichlorsilan, Dimethyldichlorsilan, Vinyltrichlorsilan, Vinylmethyldichlorsilan, Allylmethyldichlorsilan, Trimethylchlorsilan und/oder Tetrachlorsilan, mit einem Unterschuss an Alkohol, bezogen auf die Anzahl an Si-Cl-Bindungen, wobei HCl zumindest zum Teil entweicht, und anschließender Umsetzung mit einem Überschuss an Wasser, bezogen auf die Summe der Si-Cl- und Si-Alkoxy-Bindungen, und nachfolgender Trennung der wässrigen und organischen Phase sowie Abtrennung des Toluols und Alkohols aus der organischen Phase; oder um Siliciumverbindungen herstellbar durch Umsetzung der oben erwähnten Chlorsilane allein oder im Gemisch untereinander mit dem entsprechenden Alkohol (Alkoholyse) im stöchiometrischen Überschuss und ggf. Wasser (Hydrolyse, Kondensation) im stöchiometrischen Unterschuss, bezogen auf ursprünglich vorhandene Si-Cl-Bindungen. Als Alkohol werden bevorzugt Methanol oder Ethanol eingesetzt.

Beispiele für gegebenenfalls eingesetzte Initiatoren (D-3) sind alle bisher in radikalisch vernetzbare Massen bekannten Initiatoren, welche freie Radikale bereitstellen.

Bevorzugt handelt es sich bei den gegebenenfalls eingesetzten Initiatoren (D-3) um Peroxide, wie Methylethylketonperoxid, Methylisobutylketonperoxid, 2,4-Pentandionperoxid, Acetylacetonperoxid, Di-tert.-butylperoxid, Dicumylperoxid, Benzoylperoxid, tert.-Butylper-oxyacetat, tert.-Butylperoxybenzoat, tert.-Butylperoxy-2-ethylhexanoat, Dilauroylperoxid; und Peroxodicarbonate, wie Natriumperoxydicarbonat oder Bis(4-tert-butylcyclohexyl)peroxydicarbonat.

Falls die erfindungsgemäßen Massen (M-3) Komponente (D-3) enthalten, handelt es sich um Mengen von bevorzugt 0,1 bis 5 Gewichtsteilen, besonders bevorzugt 0,5 bis 3 Gewichtsteilen, jeweils bezogen auf 100 Gewichtsteile Organosiliciumverbindung (A-3).

Bevorzugt handelt es sich bei den gegebenenfalls eingesetzten Beschleunigern (E-3) um Cobalt(II)octoat, Cobalt(II)2-ethylhexanoat, Kupfer(II)acetat, Kupfer(I)chlorid, Mangan(II)acetat*4 H₂O, Barium-bis(2-ethylhexanoat), Dimethylanilin, Diethylanilin, Vanadium(V)-oxid, 2,4-Pentadienon, N,N-Diethylacetoacetamid, Diethyl-acetoacetamid, Dimethylparatoluidin, N,N,4-Trimethylanilin und/oder deren Gemische, welche gegebenenfalls gelöst sind z.B. in Xylol und/oder Testbenzin oder deren Abmischungen.

Falls die erfindungsgemäßen Massen (M-3) Komponente (E-3) enthalten, handelt es sich um Mengen von bevorzugt 0,001 bis 5 Gewichtsteilen, besonders bevorzugt 0,001 bis 1, insbesondere 0,01 bis 1, jeweils bezogen auf 100 Gewichtsteile Organosiliciumverbindung (A-3).

In einer weiteren Ausführungsform können die Radikale, die für eine radikalische Aushärtung der in den Massen (M-3) enthaltenen radikalisch vernetzbare Organosiliciumverbindungen (A-3) notwendig sind, auch durch Elektronenstrahlen erzeugt werden. Derartige Massen enthalten bevorzugt keine Initiatoren (D) und keine Beschleuniger (E).

Bei den jeweiligen zur Herstellung der erfindungsgemäßen vernetzbaren Massen (M) eingesetzten Komponenten kann es sich jeweils um eine einzelne Art einer solchen Komponente, wie auch um ein Gemisch aus mindestens zwei verschiedenen Arten einer solchen Komponente handeln.

Bei dem erfindungsgemäßen Verfahren kann die Formgebung der erfindungsgemäßen Massen (M) z.B. durch das an sich seit langem bekannte Verfahren des Spritzpressens erfolgen. Dazu wird die Masse (M) bevorzugt mit Hilfe von mechanischem Druck in ein entsprechendes Formnest injiziert. Bevorzugt ist die Form zweigeteilt und wird während des Spritzpressvorgangs durch eine hydraulische Presse verschlossen. Bevorzugt ist die Form auf die gewünschte Temperatur vorgeheizt, wodurch einerseits das Fließen der Masse erleichtert wird und andererseits die Aushärtung beschleunigt wird. Vorzugsweise wird nach Ende des Spritzpressvorganges die Form noch solange geschlossen gehalten, bis die Formkörper eine Konsistenz erreicht haben, die eine zerstörungsfreie Entnahme der Formkörper gestattet. Formnester für Prüfkörper sind z.B. in DIN EN ISO 10724-1:2002-04 beschrieben.

Ein weiterer Gegenstand der vorliegenden Erfindung sind Formkörper hergestellt durch Vernetzung der erfindungsgemäßen bzw. erfindungsgemäß hergestellten Massen (M).

Bei den erfindungsgemäßen Formkörpern handelt es sich bevorzugt um künstliche Steine.

Die erfindungsgemäßen Formkörper haben eine Härte von bevorzugt mindestens 50 Shore D, besonders bevorzugt von mindestens 60 Shore D, insbesondere von mindestens 75 Shore D.

Die erfindungsgemäßen Formkörper zeigen bei Einwirkung von UV-Strahlung im Vergleich zu herkömmlichen Formkörpern auf Basis organischer Harze noch keine Farbveränderung (Gelbverfärbung von hellen Farbtönen oder Aufhellung dunkler Farbtöne) wenn bei den herkömmlichen Systemen bereits deutliche Veränderungen sichtbar werden.

Ferner haben die erfindungsgemäßen Zusammensetzungen den Vorteil, dass sie sich hervorragend zur Herstellung von künstlichen Steinen eignen.

Die erfindungsgemäßen Zusammensetzungen haben den Vorteil, dass bei der Verarbeitung keine gesundheitsschädlichen Emissionen in dem Umfang entstehen wie sie üblicherweise bei nach dem Stand der Technik eingesetzten Polyesterharzen, welche in Styrol gelöst sind, auftreten.

Das erfindungsgemäße Verfahren hat den Vorteil, dass es einfach in der Durchführung ist.

Die erfindungsgemäßen Formkörper haben den Vorteil, dass sie eine ausgezeichnete Hitzebeständigkeit aufweisen, sodass bei höherer thermischer Belastung von bis zu 200°C geringere oder keine Verfärbungen auftreten als es bei Formkörpern, die mit organischen Polyester- oder Acrylatharzen entsprechend dem gegenwärtigen Stand der Technik hergestellt werden, der Fall ist. Außerdem bleiben auch nach längerer thermischer Belastung bei sehr hohen Temperaturen (z.B. 1h bei 700°C) die mechanischen Eigenschaften weitgehend erhalten.

Die erfindungsgemäßen Formkörper haben den Vorteil, dass sie UV- und bewitterungsstabil sind.

Die erfindungsgemäßen Formkörper haben den Vorteil, dass sie bei hoher thermischer Belastung formstabil bleiben und somit nicht die Gefahr des Ablösens von heißem und/oder brennendem festem und/oder flüssigem Material besteht.

In den nachstehend beschriebenen Beispielen beziehen sich alle Viskositätsangaben, sofern nicht anders angegeben, auf eine Temperatur von 25°C. Sofern nicht anders angegeben, werden die nachstehenden Beispiele bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In der vorliegenden Erfindung werden Stoffe durch Angabe von Daten charakterisiert, die bevorzugt mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier angegeben:

### Viskosität

In den folgenden Beispielen wird die dynamische Viskosität der Organosiliciumverbindungen nach DIN 53019 gemessen. Dabei wurde bevorzugt wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 10 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

**Beschreibung der Bestimmung der Molekulargewichtsverteilungen**
Methode: Size Exclusion Chromatography (SEC) nach DIN 55672-1
Durchflussgeschwindigkeit: 1.00 mL/min
Injektionssystem: Autosampler Agilent 1200 (Agilent Technologies)
Injektionsvolumen: 100 µL
Eluent: im Falle von phenylgruppenhaltigen Produkte wurde Tetrahydrofuran >99.5 %, stabilisiert mit 250 ppm 2,6-di-tert.-butyl-4-methylphenol (BHT) verwendet; im Falle von nicht phenylgruppenhaltigen Materialien wurde Toluol >99.9 %, p.A., eingesetzt. Alle Chemikalien sind erhältlich bei der Firma Merck KGaA, D-Darmstadt.
Säule: Stationäre Phase: Polystyrol-divinylbenzol von der Firma Agilent Technologies.
Es wurden vier Säulen hintereinandergeschaltet, bestehend aus einer 50mm langen Vorsäule und drei je 300mm langen Trennsäulen. Alle Säulen hatten einen Innendurchmesser von 7,8 mm. Die verwendeten Gele hatten eine Partikelgröße von 5 µm. Die Porengröße der Vorsäule betrug 500 Å, die der drei Trennsäulen betrug der Reihenfolge nach 10000 Å, 500 Å und 100 Å.
Säulentemperatur: Ofentemperatur 45°C Die Konzentration wurde mit einem RI-Detektor ermittelt (Messprinzip Deflexion, Typ: Agilent 1200; Zellvolumen: 8 µL; Temperatur: 45°C).
Das System wurde mit ebenfalls von der Fa. Agilent käuflich erhältlichen Polystyrolstandards kalibriert. Konzentration: 0,4 g/L Easi-Cal, fertige Polystyrol-Kalibriermittel; Injektionsvolumen: 100 µL. Als interner Standard für Toluol als Eluent wurde Tetrahydrofuren als Markersubstanz verwendet und als interner Standard für Tetrahydrofuren als Eluent wurde Toluol als Markersubstanz verwendet. Anpassen von Kalibrierkurven: Polynomeller Fit PSS 3. Ordnung Probenvorbereitung: Etwa 15 - 50 mg der zu messenden Probe wurden im jeweiligen Eluent gelöst (c = etwa 3 - 10 mg/mL). Die Probenmenge wurde so bemessen, dass ein deutliches RI-Signal erhalten werden konnte. Alle Proben ließen sich vollständig im Eluenten lösen. Auswertung: Die ermittelten Molgewichte wurden jeweils auf ganze Hunderter gerundet.

### Biegefestigkeit

In der vorliegenden Erfindung wurde die Biegefestigkeit nach DIN EN 14617-2:2008-11 bei einer Auflagedistanz von 180 mm gemessen.

Dabei wurde wie folgt vorgegangen: Es wurden drei Prüfkörper in den Dimensionen Länge x Breite x Dicke = 200 mm x 50 mm x 10 mm verwendet. Die Messungen wurden an jeweils 3 Prüfkörpern durchgeführt. Die Prüfkörper wurden wie in den Beispielen angegeben hergestellt und unter den in den Beispielen angegebenen Bedingungen (Temperatur, Zeit) ausgehärtet. Bei der Prüfung wurden die Probekörper stets so in die Maschine eingelegt, wie sie auch in der Spritzgießform lagen, d.h. mit der Unterseite nach unten. Vor der Messung wurden die Probekörper bei 23°C und 50 % rel. Luftfeuchtigkeit für 24 h konditioniert. Der angegebene Wert für die Biegefestigkeit in MPa entspricht dem jeweiligen Mittelwert der Einzelmessungen, entsprechend DIN 1333:1992-02 Abschnitt 4.5 gerundet auf 0,1Mpa.

### Shore-D-Härte:

Die Messung der Härte wurde nach DIN EN ISO 868:2003-10 bestimmt. Dabei wurde bevorzugt wie folgt vorgegangen: Die Messung wurde mit einem Durometer (Shore D-Härte) an Platten-Probekörpern in den Dimensionen Länge x Breite x Dicke = 40 mm x 40 mm x 6 mm durchgeführt, welche durch Spritzgießverfahren mit einem Werkzeug mit austauschbaren Formnestplatten in Anlehnung an DIN EN ISO 10724-1:2002-04 Form 2 hergestellt und unter den in den Beispielen angegebenen Bedingungen (Temperatur, Zeit) ausgehärtet wurden. Vor der Messung wurden die Prüfkörper bei 23°C und 50 % rel. Luftfeuchtigkeit für die in den Beispielen angegebene Zeit vorgelagert.

### Beispiel 1

100 Gewichtsteile einer pulverförmigen Organosiliciumverbindung mit einem mittleren Molekulargewicht Mw von 6600 g/mol, einem mittleren Molekulargewicht Mn von 2000 g/mol und einer Polydispersität von 3,3, der durchschnittlichen Formel (MeSiO_{3/2})_{0,88}(MeSi(OH)O_{2/2})_{0,05}-(MeSi(OEt)O_{2/2})_{0,06}(Me₂SiO_{2/2})_{0,01},
65 Gewichtsteile einer Organosiliciumverbindung mit der durchschnittlichen Zusammensetzung (MeSiO_{3/2})_{0,19}(i-OctSiO_{3/2})_{0,05}-(MeSi(OMe)O_{2/2})_{0,30}(i-OctSi(OMe)O_{2/2})_{0,08}(MeSi(OMe)₂O_{1/2})_{0,16}(i-OctSi(OMe)₂O_{1/2})_{0,07}(Me₂SiO_{2/2})_{0,15} mit einem mittleren Molekulargewicht Mw von 1550 g/mol, einem mittleren Molekulargewicht Mn von 550 g/mol und einer Polydispersität von 2,8, wurden in einem Rundkolben vorgelegt. Anschließend wurde die Mischung unter Rühren auf 55°C erwärmt, wobei eine homogene Mischung entstand. Danach wurde die Temperatur des Gemisches auf 95°C erhöht und nach dem Erreichen dieser Temperatur ein Druck von 100 mbar angelegt. Unter diesen Bedingungen wurde weitere 2,5 Stunden gerührt, danach ließ man das Gemisch bei einem Druck von 100 mbar auf eine Temperatur von 23°C abkühlen bevor der Unterdruck gebrochen wurde. Die so erhaltene Harzmischung wies eine dynamische Viskosität von 6000 mPa•s bei 25°C und eine dynamische Viskosität von 200 mPa·s bei 80°C auf.

150 Gewichtsteile grobkörniger Quarz der Type "Quarzkies SB 2-3,2T" mit einer Korngröße von 2 mm bis 3,2 mm, 200 Gewichtsteile grobkörniger Quarz der Type "Quarzsand SB 0,7-1,2T" mit einer Korngröße von 0,7 mm bis 1,2 mm, 300 Gewichtsteile grobkörniger Quarz der Type "Quarzsand SB 0,3-0,9T" mit einer Korngröße von 0,3 mm bis 0,9 mm, alle drei käuflich erhältlich bei Amberger Kaolinwerke Eduard Kick GmbH & Co. KG in D-Hirschau, und 350 Gewichtsteile feinteiliges Quarzmehl mit einer oberen Korngröße d_{95%} von 50 µm und einer mittleren Korngröße d_{50%} von 16 µm der Type "Millisil W12" (käuflich erhältlich bei Quarzwerke GmbH, D-Frechen) wurden in einem Trommelmischer vorgelegt und 1 Minute gemischt. Anschließend wurden 100 Gewichtsteile der oben beschriebene Harzmischung, temperiert auf 23°C, zugegeben und weitere 10 Minuten gemischt. Danach wurden 0,8 Gewichtsteile einer Lösung von 0,4 Gewichtsteilen N,N,N',N'-Tetrame-thylguanidin in 0,4 Gewichtsteilen 2,4,4-Trimethylpentyltrimethoxysilan zugesetzt und nochmals 5 Minuten gemischt. Diese Mischung hatte eine Konsistenz ähnlich nassem Sand. Diese Mischung wurde in ein Formnest aus Edelstahl mit den Dimensionen Länge x Breite x Höhe = 220 mm x 170 mm x 15 mm eingefüllt. Die Masse wurde in der Form auf einem Rütteltisch mit einer Frequenz von 50 Hz innerhalb von 2 Minuten vorverdichtet. Anschließend wurde die Form in eine hydraulische Presse montiert und das Formnest zusammen mit der Masse durch Anlegen eines Unterdrucks von 250 mbar entlüftet. Daran anschließend wurde die Form mit einer Presskraft von 150 kN verdichtet. Das entspricht einem Pressdruck, bezogen auf die Oberfläche der herzustellenden Prüfplatte von 4000 kPa. Daran anschließend wurde die Form in einem Ofen für 4 Stunden bei 150°C gelagert. Nach Abkühlen auf Raumtemperatur wurde der Formkörper der Form entnommen. Aus dem Formkörper wurden Probekörper der Dimension Länge x Breite x Höhe = 200 mm x 50 mm x 10 mm ausgeschnitten. An diesen Probekörpern wurde die Biegefestigkeit nach DIN EN 14617-2:2008-11 gemessen. Es wurde ein Wert für die Biegefestigkeit von 14,3 MPa erhalten.

### Beispiel 2

Zunächst wurden 10,5 Gewichtsteile einer Organosiliciumverbindung der Zusammensetzung (Me₃SiO_{1/2})₂(Me(H)SiO_{2/2})₃₅ mit 10,0 Gewichtsteilen einer Organosiliciumverbindung der Formel [MeViSiO_{2/2}]₄ und 4,5 Gewichtsteilen einer Organosiliciumverbindung der Formel [MeViSiO_{2/2}]₅ gemischt.

250 Gewichtsteile grobkörniger Quarz der Type "Quarzsand SB 0,7-1,2T" mit einer Korngröße von 0,7 mm bis 1,2 mm, 400 Gewichtsteile grobkörniger Quarz der Type "Quarzsand SB 0,3-0,9T" mit einer Korngröße von 0,3 mm bis 0,9 mm, (beide käuflich erhältlich bei Amberger Kaolinwerke Eduard Kick GmbH & Co. KG in D-Hirschau), sowie 350 Gewichtsteile feinteiliges Quarzmehl mit einer oberen Korngröße d_{95%} von 50 µm und einer mittleren Korngröße d_{50%} von 16 µm der Type "Millisil W12" (käuflich erhältlich bei Quarzwerke GmbH, D-Frechen) wurden in einem Trommelmischer vorgelegt und 1 Minute gemischt. Anschließend wurden 100 Gewichtsteile der oben beschriebenen Mischung der Organosiliciumverbindung, temperiert auf 23°C, zugegeben und weitere 10 Minuten gemischt. Danach wurden 2,026 Gewichtsteile einer Mischung von 0,026 Gewichtsteilen eines Karstedt-Katalysators mit einem Platingehalt von 19 Gew.-% und 2 Gewichtsteilen Organosiliciumverbindung der Formel [MeViSiO_{2/2}]₄ zugegeben und nochmals 5 Minuten gemischt. Diese Mischung hatte eine Konsistenz ähnlich nassem Sand. Diese Mischung wurde in ein Formnest aus Edelstahl mit den Dimensionen Länge x Breite x Höhe = 220 mm x 170 mm x 15 mm eingefüllt. Die Masse wurde in der Form auf einem Rütteltisch mit einer Frequenz von 50 Hz innerhalb von 2 Minuten vorverdichtet. Anschließend wurde die Form in eine hydraulische Presse montiert und das Formnest zusammen mit der Masse durch Anlegen eines Unterdrucks von 250 mbar entlüftet. Daran anschließend wurde die Form mit einer Presskraft von 150 kN verdichtet. Das entspricht einem Pressdruck, bezogen auf die Oberfläche der herzustellenden Prüfplatte von 4000 kPa. Daran anschließend wurde die Form in einem Ofen für 2 Stunden bei 150°C gelagert. Nach Abkühlen auf Raumtemperatur wurde der Formkörper der Form entnommen. Aus dem Formkörper wurden Probekörper der Dimension Länge x Breite x Höhe = 200 mm x 50 mm x 10 mm ausgeschnitten. An diesen Probekörpern wurde die Biegefestigkeit nach DIN EN 14617-2:2008-11 gemessen. Es wurde ein Wert für die Biegefestigkeit von 15,8 MPa ermittelt.

### Beispiel 3

Die in Beispiel 2 beschriebene Arbeitsweise wird wiederholt mit der Abänderung, dass anstelle von 350 Gewichtsteilen feinteiligem Quarzmehl der Type "Millisil W12" nur 250 Gewichtsteile feinteiliges Quarzmehl der Type "Millisil W12" und 100 Gewichtsteile eines mit Vinyldimethylchlorsilan beschichteten feinteiligen Wollastonitmehls der Type "Tremin 939-100 VST" mit einer Nadellänge von 5 µm bis 150 µm und einem mittleren Länge- zu Durchmesser-Verhältnis von 7 zu 1 (beide käuflich erhältlich bei Quarzwerke GmbH, D-Frechen) eingesetzt wurden. Es wurde ein Wert für die Biegefestigkeit von 17,0 MPa ermittelt.

## Patentansprüche

1. Vernetzbare Massen (M) auf Basis von Organosiliciumverbindungen (A) mit einem Anteil an Füllstoffen (B) von mindestens 85 Gew.-%, mit der Maßgabe, dass Komponente (B) zumindest zum Teil aus grobkörnigen Füllstoffen mit Korngrößen von 0,2 mm bis 10 mm besteht.

2. Vernetzbare Massen gemäß Anspruch 1, **dadurch gekennzeichnet, dass** Füllstoffe (B) in Mengen von insgesamt 90 bis 99 Gewichtsteilen, bezogen auf 100 Gewichtsteile der vernetzbaren Masse (M), enthalten sind.

3. Vernetzbare Massen gemäß Anspruch 1 oder 2, **dadurch gekennzeichnet, dass** es sich bei den Organosiliciumverbindungen (A) um durch Kondensationsreaktion vernetzbare Organosiliciumverbindungen oder durch Additionsreaktion vernetzbare Organosiliciumverbindungen handelt.

4. Vernetzbare Massen gemäß einem oder mehreren der Ansprüche 1 bis 3, **dadurch gekennzeichnet, dass** es sich bei den Massen (M) um solche enthaltend
(A) 100 Gewichtsteile mindestens einer vernetzungsfähigen Organosiliciumverbindung,
(B) 900 bis 2400 Gewichtsteile mindestens eines Füllstoffs, gegebenenfalls (C) Katalysatoren,
gegebenenfalls (D) Initiatoren,
gegebenenfalls (E) Beschleuniger,
gegebenenfalls (F) Inhibitoren und
gegebenenfalls (G) weitere Bestandteile
handelt, mit der Maßgabe, dass der Anteil an Füllstoffen (B) in der Masse (M) mindestens 85 Gew.-% beträgt und dass Komponente (B) zumindest zum Teil aus grobkörnigen Füllstoffen mit Korngrößen von 0,2 mm bis 10 mm besteht.

5. Verfahren zur Herstellung der Massen (M) gemäß einem oder mehreren der Ansprüche 1 bis 4 durch Mischen der einzelnen Komponenten in beliebiger Reihenfolge.

6. Verfahren zur Herstellung von Formkörpern auf der Basis von Organosiliciumverbindungen, **dadurch gekennzeichnet, dass** die vernetzbaren Massen (M) gemäß einem oder mehreren der Ansprüche 1 bis 4 oder hergestellt nach Anspruch 5 in Form gebracht und ausgehärtet werden.

7. Verfahren nach Anspruch 6, **dadurch gekennzeichnet, dass** die vernetzbaren Massen (M) vermittels mechanischem Druck in Form gebracht, wobei gegebenenfalls während der Formgebung die überschüssige Luft in der Masse zum Teil oder vollständig durch Anlegen eines atmosphärischen Unterdrucks an die Form entfernt wird, und gegebenenfalls während und/oder nach der Formgebung eine weitere Verdichtung durch Vibration der Form erzielt wird, und die Massen während und/oder nach der Formgebung durch Steigerung der Temperatur zum Aushärten gebracht werden.

8. Formkörper hergestellt durch Vernetzung der Massen (M) gemäß einem oder mehreren der Ansprüche 1 bis 4 oder hergestellt gemäß Anspruch 5.

9. Formkörper gemäß Anspruch 8, **dadurch gekennzeichnet, dass** es sich um künstliche Steine handelt.

10. Formkörper gemäß Anspruch 8 oder 9, **dadurch gekennzeichnet, dass** sie eine Härte von mindestens 50 Shore D aufweisen.

## Claims

1. Crosslinkable composition (M) based on organosilicon compounds (A) having a content of fillers (B) of at least 85% by weight, with the proviso that component (B) consists at least in part of coarse-grained fillers with grain sizes of from 0.2 mm to 10 mm.

2. Crosslinkable composition according to Claim 1, **characterized in that** fillers (B) are present in amounts of, in total, from 90 to 99 parts by weight, based on 100 parts by weight of Crosslinkable composition (M).

3. Crosslinkable composition according to Claim 1 or 2, **characterized in that** the organosilicon compounds (A) are organosilicon compounds crosslinkable by condensation reaction or organosilicon compounds crosslinkable by addition reaction.

4. Crosslinkable composition according to one or more of Claims 1 to 3, **characterized in that** the compositions (M) are compositions comprising
(A) 100 parts by weight of at least one crosslinkable organosilicon compound,
(B) from 900 to 2400 parts by weight of at least one filler,
optionally (C) catalysts,
optionally (D) initiators,
optionally (E) accelerators,
optionally (F) inhibitors, and
optionally (G) further constituents,
with the proviso that the content of fillers (B) in the composition (M) is at least 85% by weight and that component (B) consists at least in part of coarse-grained fillers with grain sizes of from 0.2 mm to 10 mm.

5. Method for producing the compositions (M) according to one or more of Claims 1 to 4 by mixing the individual components in any desired sequence.

6. Method for producing moulded bodies based on organosilicon compounds, **characterized in that** Crosslinkable compositions (M) according to one or more of Claims 1 to 4 or produced according to Claim 5 are shaped and cured.

7. Method according to Claim 6, **characterized in that** Crosslinkable compositions (M) are shaped by means of mechanical pressure, wherein the excess air in the composition is optionally removed partially or completely during shaping by application of an atmospheric low pressure to the mould, and further densification is optionally achieved during and/or after shaping by vibration of the mould, and the compositions are made to cure during and/or after shaping by increasing the temperature.

8. Moulded bodies produced by crosslinking the compositions (M) according to one or more of Claims 1 to 4 or produced according to Claim 5.

9. Moulded bodies according to Claim 8, **characterized in that** they are artificial stones.

10. Moulded bodies according to Claim 8 or 9, **characterized in that** they have a hardness of at least 50 Shore D.

## Revendications

1. Matières réticulables (M) à base de composés organosiliciés (A) ayant une teneur en charges (B) d'au moins 85 % en poids, étant entendu que le composant (B) est au moins en partie constitué de charges à gros grains ayant des tailles de grains de 0,2 mm à 10 mm.

2. Matières réticulables selon la revendication 1, **caractérisées en ce que** les charges (B) sont contenues en des quantités d'au total 90 à 99 parties en poids, par rapport à 100 parties en poids de la matière réticulable (M).

3. Matières réticulables selon la revendication 1 ou 2, **caractérisées en ce que** pour ce qui est des composés organosiliciés (A) il s'agit de composés organosiliciés réticulables par réaction de condensation ou de composés organosiliciés réticulables par réaction d'addition.

4. Matières réticulables selon une ou plusieurs des revendications 1 à 3, **caractérisées en ce que** pour ce qui est des matières (M) il s'agit de celles contenant
(A) 100 parties en poids d'au moins un composé organosilicié apte à la réticulation,
(B) 900 à 2 400 parties en poids d'au moins une charge,
éventuellement (C) des catalyseurs,
éventuellement (D) des amorceurs,
éventuellement (E) des accélérateurs,
éventuellement (F) des inhibiteurs et
éventuellement (G) d'autres composants,
étant entendu que la proportion des charges (B) dans la matière (M) est d'au moins 85 % en poids et que le composant (B) est au moins en partie constitué de charges à gros grains ayant des tailles de grains de 0,2 mm à 10 mm.

5. Procédé pour la production des matières (M) selon une ou plusieurs des revendications 1 à 4, par mélange des composants individuels en un ordre quelconque.

6. Procédé pour la fabrication de corps moulé à base de composés organosiliciés, **caractérisé en ce qu'**on met en forme et fait durcir les matières réticulables (M) selon une ou plusieurs des revendications 1 à 4 ou produites selon la revendication 5.

7. Procédé selon la revendication 6, **caractérisé en ce qu'**on met en forme par pression mécanique les matières réticulables (M), éventuellement en éliminant pendant la mise en forme en partie ou en totalité l'air en excès dans la masse, par application sur le moule d'une dépression atmosphérique, et éventuellement, pendant et/ou après la mise en forme, en parvenant à un compactage plus poussé par vibration du moule, et en faisant durcir les matières par élévation de la température pendant et/ou après la mise en forme.

8. Corps moulés fabriqués par réticulation des matières (M) selon une ou plusieurs des revendications 1 à 4 ou produites selon la revendication 5.

9. Corps moulés selon la revendication 8, **caractérisés en ce qu'**il s'agit de pierres artificielles.

10. Corps moulés selon la revendication 8 ou 9, **caractérisés en ce qu'**ils présentent une dureté d'au moins 50 Shore D.
